# EUROPEAN PATENT APPLICATION

(11) **EP 4 596 850 A1**
(43) Date of publication of application: **06.08.2025**
(21) Application number: 25154739.4
(22) Date of filing: 29.01.2025
(51) Int. Cl.: F01M 1/10, F16N 39/00, F16N 39/08, B04B 1/08, B04B 15/02, B63H 21/38

(54) **LUBRICATING OIL PURIFICATION SYSTEM AND LUBRICATING OIL PURIFICATION METHOD**

(30) Priority: 30.01.2024 JP 2024012019
(71) Applicant: Mitsubishi Kakoki Kaisha, Ltd, Kawasaki-shi, Kanagawa 210-8560 (JP)
(72) Inventor: OTANI, Yoichiro, Kawasaki-shi, Kanagawa, 210-8560 (JP); MATSUNARI, Kenji, Kawasaki-shi, Kanagawa, 210-8560 (JP)
(74) Representative: Daub, Thomas

(57) **Abstract**

A lubricating oil purification system for purifying a stock solution mixed with ammonia water into lubricating oil, the lubricating oil purification system includes: an engine; a lubricating oil purifier configured to separate a stock solution containing the lubricating oil used in the engine into a light liquid which is at least the purified lubricating oil and a heavy liquid containing ammonia; and a water supply unit configured to supply water into a separation chamber during operation of the lubricating oil purifier.

## Description

### BACKGROUND

### 1. Field of the Invention

The present disclosure relates to a lubricating oil purification system and a lubricating oil purification method for purifying lubricating oil containing ammonia water or the like.

### 2. Description of the Related Art

As a countermeasure against global warming, an ammonia fuel, which does not discharge carbon dioxide as a greenhouse gas during combustion, has attracted attention as a promising energy for implementing a carbon-neutral society. In recent years, the practical use of an ammonia gas turbine engine and an ammonia-compatible engine, which can be operated using liquid ammonia as a ship fuel, has been advanced.

In addition, in the case in which the liquid ammonia is used as the fuel, the development for operation of an ammonia fuel ship as a so-called zero-emission ship also has been advanced (see, for example, JP6934555B and JP6940727B).

When the liquid ammonia is used in an engine such as a ship, there is a problem that unburned ammonia gas in the engine is dissolved in moisture in lubricating oil.

More specifically, the moisture is mixed into the lubricating oil due to condensation during engine operation or after the engine is stopped. When the engine is operated without removing the moisture, an ammonia concentration in the engine increases, and the ammonia is dissolved in the moisture in the lubricating oil.

There is a problem that a material exposed to ammonia water and ammonia atmosphere is corroded. In a lubricating oil purifier that separates a stock solution containing used lubricating oil into a heavy liquid and a light liquid (lubricating oil), when the stock solution is mixed with ammonia, a specific gravity of the heavy liquid decreases, a removal rate of the heavy liquid decreases, and there is a risk of problems such as the light liquid (lubricating oil) flowing out of a heavy liquid side, or the heavy liquid being mixed into the light liquid.

### SUMMARY

An object of the present disclosure is to solve the above problems and to provide a lubricating oil purification system and a lubricating oil purification method capable of stably separating lubricating oil from a stock solution containing ammonia water and the lubricating oil.

According to an aspect of the present disclosure, there is provided a lubricating oil purification system for purifying a stock solution mixed with ammonia water into lubricating oil, the lubricating oil purification system including: an engine; a lubricating oil purifier configured to separate a stock solution containing the lubricating oil used in the engine into a light liquid which is at least the purified lubricating oil and a heavy liquid containing ammonia; and a water supply unit configured to supply water into a separation chamber during operation of the lubricating oil purifier.

According to another aspect of the present disclosure, there is provided a lubricating oil purification method for purifying a stock solution mixed with ammonia water into lubricating oil, the lubricating oil purification method including:
separating a stock solution containing the lubricating oil used in an engine into a light liquid which is at least the lubricating oil purified by a lubricating oil purifier and a heavy liquid containing ammonia; and
supplying water into a separation chamber during operation of the lubricating oil purifier.

The lubricating oil purification system and the lubricating oil purification method of the present disclosure can stably separate the lubricating oil from the stock solution containing the ammonia water and the lubricating oil.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
Fig. 1 is a block diagram showing a lubricating oil purification system and a lubricating oil purification method according to embodiments of the present disclosure;
Fig. 2 is a central vertical cross-sectional view showing a lubricating oil purifier;
Fig. 3 is a central vertical cross-sectional view of a rotating body of the lubricating oil purifier;
Fig. 4 is a schematic diagram showing a state inside a rotating body when normal lubricating oil is centrifuged by the lubricating oil purifier;
Fig. 5 is a schematic diagram showing a state inside the rotating body when normal lubricating oil mixed with ammonia is centrifuged by the lubricating oil purifier;
Fig. 6 is a view showing the lubricating oil purification method according to the embodiment of the present disclosure, and is a schematic diagram showing a state inside a rotating body when sealing water and replacement water are introduced into lubricating oil mixed with ammonia and the lubricating oil mixed with ammonia is centrifuged by the lubricating oil purifier; and
Fig. 7 is a block diagram showing modifications of the lubricating oil purification system and the lubricating oil purification method according to the embodiments of the present disclosure.

### DETAILED DESCRIPTION OF THE INVENTION

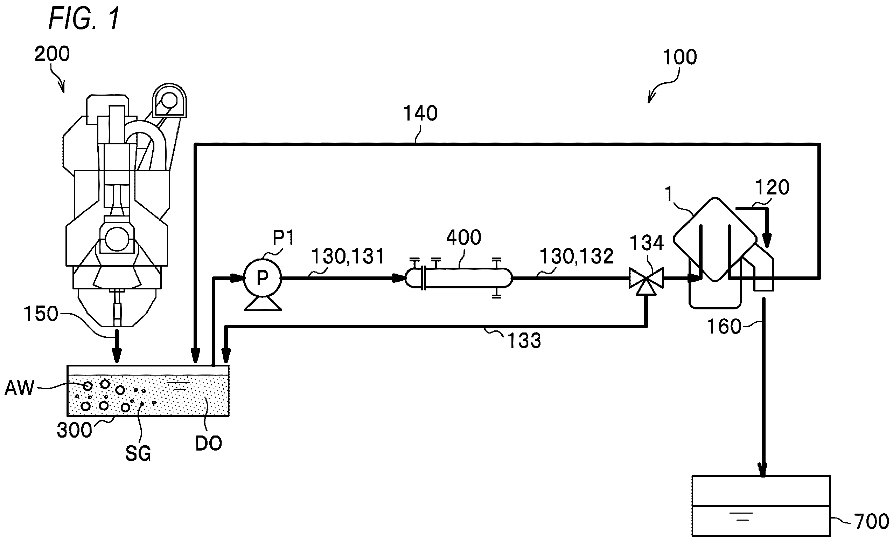

A lubricating oil purification system 100 and a lubricating oil purification method according to embodiments of the present disclosure will be described in detail with reference to Figs. 1 to 6.

### <<Lubricating Oil Purification System>>

The lubricating oil purification system 100 shown in Fig. 1 is a purifier for purifying and reusing a waste liquid SW such as lubricating oil LO, fuel oil, and built-in water used in an engine 200 or the like installed in a limited installation space (for example, an island power plant or an existing power plant) on a ship or land.

Hereinafter, a case in which the lubricating oil LO used in the engine 200 for combusting liquid ammonia is treated as the waste liquid SW will be described as an example of the lubricating oil purification system 100 according to the present disclosure.

In the engine 200 using the liquid ammonia as a fuel, sludge SG or ammonia water AW may be mixed into the lubricating oil LO in the engine 200.

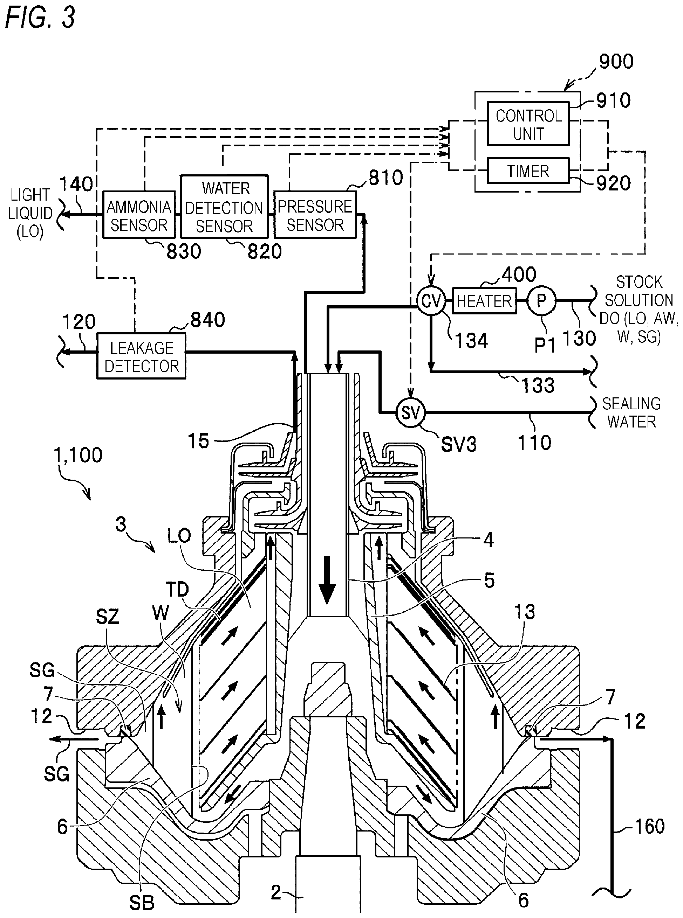

The lubricating oil purification system 100 includes a lubricating oil purifier 1. The lubricating oil purifier 1 is a three-phase separation type disk stack centrifuge that separates a stock solution DO, which is the lubricating oil LO mixed with the ammonia water AW, into a light liquid that is the purified lubricating oil LO, a heavy liquid that is the ammonia water AW containing ammonia, and the sludge SG (solid content). More specifically, as shown in Fig. 1 or 3, the lubricating oil purification system 100 mainly includes a lubricating oil tank 300, a lubricating oil supply pump P1, a heater 400, a lubricating oil purifier 1, a sludge tank 700, a water supply line 110 (water supply unit), a heavy liquid discharge line 120 (water drainage unit), a pressure sensor 810, a stock solution supply line 130, a sludge discharge line 160, and a control device 900. The lubricating oil purification system 100 is disposed in the ship.

The light liquid discharge line 140 may include a pressure sensor 810, a water detection sensor 820, and an ammonia sensor 830.

### <<Engine>>

The engine 200 shown in Fig. 1 is a ship diesel engine disposed in the ship, and may be a turbine engine in which liquid ammonia having a discharge amount of carbon dioxide as a greenhouse gas of zero is used as a fuel. The engine 200 includes a mechanism that connects a crankshaft and a piston with only a connecting rod. In the engine 200, a lateral pressure, which is a lateral force, is generated on the piston, causing uneven wear in the cylinder. Therefore, the lubricating oil LO for improving the movement of the piston is used in the engine 200. The engine 200 may co-combust the liquid ammonia and a fossil fuel such as natural gas.

### <<Lubricating Oil Discharge Line>>

A lubricating oil discharge line 150 shown in Fig. 1 is a piping path for feeding the lubricating oil LO (stock solution DO) used in the engine 200 to the lubricating oil tank 300. The lubricating oil discharge line 150 is connected to the engine 200 at one end and to the lubricating oil tank 300 at the other end.

### <<Lubricating Oil Tank and Lubricating Oil>>

As shown in Fig. 1, the lubricating oil tank 300 is a tank for storing the stock solution DO containing the lubricating oil LO used in the engine 200. The stock solution DO to be supplied from the engine 200 to the lubricating oil tank 300 contains ammonia derived from an ammonia fuel. Therefore, the lubricating oil tank 300 is a tank with a lid that prevents vaporized ammonia from leaking outside the lubricating oil tank 300.

The stock solution DO contains moisture mixed in the engine 200. A specific gravity of the stock solution DO is 0.90 to 0.96.

### «Ammonia Water and Water»

The ammonia water AW is an alkaline aqueous solution in which ammonia is dissolved in water W. The ammonia water AW has a unique stimulus odor. The ammonia water AW may corrode a fluororubber O-ring or a heavy liquid and light liquid impeller made of copper alloy to be used in the lubricating oil purifier 1. Therefore, the other parts are preferably made of a corrosion-resistant material.

A specific gravity of the ammonia water AW is lighter than that of water. The specific gravity of the ammonia water AW is, for example, 0.9 at a concentration of about 28% and 0.88 at a concentration of about 35%. The specific gravity of the ammonia water AW changes depending on the ammonia concentration, and thus a position of a separation boundary surface SB in a separation chamber SZ of the lubricating oil purifier 1 moves in a radial direction. When the stock solution DO mixed with the ammonia water AW is processed, the position of the separation boundary surface SB is preferably controlled by intermittently or continuously supplying the water W into the separation chamber SZ and adjusting the specific gravity of the ammonia water AW (heavy liquid).

### <<Stock Solution Supply Line>>

The stock solution supply line 130 shown in Fig. 1 is a piping path for supplying the stock solution DO (lubricating oil LO mixed with the sludge SG and the ammonia water AW) stored in the lubricating oil tank 300 to the lubricating oil purifier 1. The stock solution supply line 130 includes a heater upstream side line 131 from the lubricating oil tank 300 to the heater 400, and a heater downstream side line 132 from the heater 400 to the lubricating oil purifier 1. The heater upstream side line 131 is provided with a lubricating oil supply pump P1, and the heater downstream side line 132 is provided with a three-way valve 134.

### <<Lubricating Oil Supply Pump>>

The lubricating oil supply pump P1 is a pump for feeding the stock solution DO in the lubricating oil tank 300 from the stock solution supply line 130 to the lubricating oil purifier 1 via the heater 400. The lubricating oil supply pump P1 is disposed between the lubricating oil tank 300 of the heater upstream side line 131 and the heater 400. As shown in Fig. 1, the ammonia water AW is mixed in the stock solution DO in the heater upstream side line 131.

### <<Heater>>

The heater 400 is an oil heater that heats the lubricating oil LO to be fed to the lubricating oil purifier 1. The heater 400 is provided between the lubricating oil supply pump P1 of the stock solution supply line 130 and the lubricating oil purifier 1. The heater 400 heats the lubricating oil LO to, for example, about 90°C. The heater 400 can increase a solid content and/or moisture separation efficiency in the lubricating oil purifier 1 by heating the lubricating oil LO and decreasing a viscosity.

A stock solution return line 133 is a piping path for switching a flow of the stock solution when it is necessary for a driving operation such as the time of sludge discharge of the lubricating oil purifier 1, the time of alarm generation, and the time of replacement water and sealing water input.

### <<Light Liquid Discharge Line>>

The light liquid discharge line 140 is a flow path for returning the lubricating oil LO (light liquid) purified by the lubricating oil purifier 1 to the lubricating oil tank 300. The light liquid discharge line 140 is a piping path from a discharge port of the lubricating oil purifier 1 to a lubricating oil supply port of the lubricating oil tank 300.

### <<Lubricating Oil Purifier>>

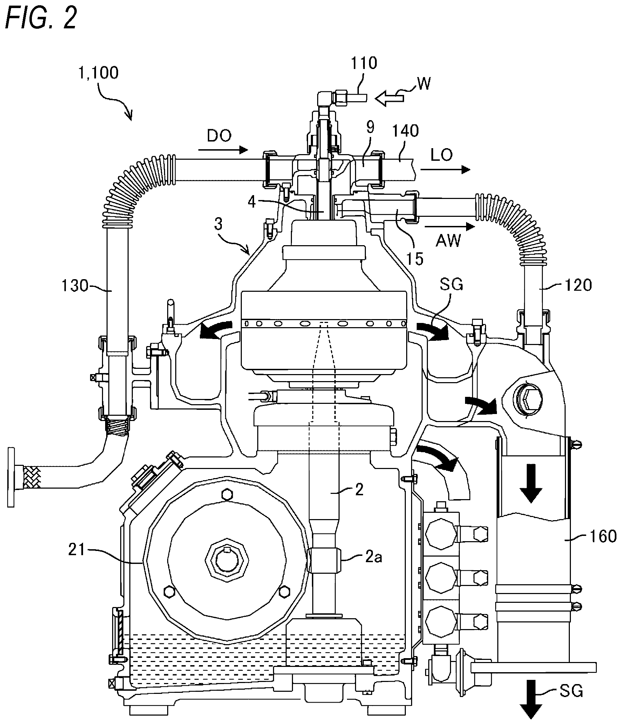

The lubricating oil purifier 1 is a device for separating and removing from the lubricating oil LO the sludge SG (solid content) or the ammonia water AW contained in the stock solution DO supplied from the lubricating oil tank 300. The lubricating oil purifier 1 may be, for example, a disk stack centrifuge that separates the stock solution DO into three phases of liquid (light liquid)-liquid (heavy liquid)-solid content by a centrifugal force of a rotating body 3 (see Fig. 2) that rotates at a high speed. The lubricating oil purifier 1 is disposed between the stock solution supply line 130 and the light liquid discharge line 140 in the ship.

Next, the lubricating oil purifier 1 implemented by the disk stack centrifuge will be described in more detail with reference to Figs. 2 and 3.

As shown in Figs. 2 and 3, the lubricating oil purifier 1 is a centrifuge (centrifugal settler) in which a large number of separation plates 13 implemented by truncated conical thin plates are stacked in the rotating body 3 at intervals in an axial direction of a guide cylinder 5. The lubricating oil purifier 1 has a mechanism for discharging the sludge SG deposited on an inner wall of the rotating body 3 to the outside by opening and closing a valve cylinder 6. As shown in Fig. 3, the lubricating oil purifier 1 includes a rotating shaft 2, the rotating body 3, the guide cylinder 5, the separation chamber SZ, the valve cylinder 6, a light liquid discharge portion 9, and a heavy liquid discharge portion 15.

### <Rotating Shaft>

As shown in Fig. 2, the rotating shaft 2 has a gear portion 2a that meshes with a speed increasing gear 21 that is rotationally driven by an electric motor (not shown), and is rotated by the electric motor (not shown) with the speed increasing gear 21 interposed therebetween.

### <Rotating Body>

As shown in Fig. 3, the rotating body 3 is a member that is attached to the rotating shaft 2 and rotates at a high speed around the rotating shaft 2. The rotating body 3 has an integral shape in which an upper half portion is a substantially truncated cone-shaped portion and a lower half portion is a large-diameter cylindrical portion whose diameter is larger than a large diameter of the truncated cone-shaped portion. The rotating body 3 is fixed to the rotating shaft 2.

### <Liquid Inlet Pipe>

As shown in Fig. 3, a liquid inlet pipe 4 is a pipe body for supplying the stock solution DO (lubricating oil LO used in the engine 200) and the water W to the inside of the rotating body 3. The liquid inlet pipe 4 is provided at an upper portion of a central portion of the rotating body 3. The water supply line 110 and the stock solution supply line 130 (see Fig. 2) are connected upstream of the liquid inlet pipe 4. Further, the water W to be supplied into the separation chamber SZ of the lubricating oil purifier 1 is introduced into the rotating body 3 from the water supply line 110 via the liquid inlet pipe 4.

### <Guide Cylinder>

The guide cylinder 5 is a member for guiding the stock solution DO and the water W introduced into the rotating body 3 from the liquid inlet pipe 4 to the separation chamber SZ from a lowermost portion in the rotating body 3. The guide cylinder 5 is a cylindrical body having a flared shape, and is provided at the central portion in the rotating body 3.

### <Separation Chamber>

The separation chamber SZ is a chamber for separating the stock solution DO into respective components by a centrifugal force according to a specific gravity difference. The separation chamber SZ is a circular space in a cross-sectional view. The large number of stacked separation plates 13 are disposed in the separation chamber SZ. The separation chamber SZ includes a separation region in which the stacked separation plates 13 are disposed and a sludge deposition region in an outermost diameter portion in the rotating body 3. In a process in which the stock solution DO introduced into the separation chamber SZ flows upward through a gap between the separation plates 13, the sludge SG having the highest specific gravity deposits in the outer sludge deposition region, the heavy liquid (ammonia water AW or water W) having a lower specific gravity than the sludge SG moves to a region between the sludge deposition region and the separation region, and the light liquid (lubricating oil LO) having the lowest specific gravity moves toward the center of the rotating body 3. The light liquid (purified lubricating oil LO) is discharged to the outside from the light liquid discharge portion 9 provided on the upper portion of the rotating body 3. The ammonia water (heavy liquid) AW separated in the separation chamber SZ is discharged to the outside from the heavy liquid discharge portion 15 through a flow path formed between a water intake plate TD and an inner wall of the upper portion of the rotating body 3.

### <Valve Cylinder>

The valve cylinder 6 is a valve body that opens and closes a sludge discharge port 12 (portion that is in pressure contact with a valve packing 7). When a pilot valve V is opened to discharge water on a lower side of the valve cylinder 6, the valve cylinder 6 is lowered to open the sludge discharge port 12, and the sludge SG is discharged.

### <Light Liquid Discharge Portion>

The light liquid discharge portion 9 is a part for discharging the lubricating oil LO (light liquid) separated in the separation chamber SZ to the outside. The light liquid discharge line 140 is attached to the light liquid discharge portion 9.

### <Heavy Liquid Discharge Portion>

The heavy liquid discharge portion 15 is a part for discharging the ammonia water (heavy liquid) separated in the separation chamber SZ to the outside. The heavy liquid discharge line 120 is attached to the heavy liquid discharge portion 15.

### <Sludge Discharge Line>

The sludge discharge line 160 (water drainage unit) is a discharge path for discharging the sludge SG centrifuged by the lubricating oil purifier 1 to the outside of the lubricating oil purifier 1. The sludge discharge line 160 has an upstream side connected to the sludge discharge port 12 and a downstream side connected to the sludge tank 700 (see Fig. 1). The sludge SG in the lubricating oil purifier 1 is discharged to the sludge discharge line 160 and stored in the sludge tank 700, and then discarded.

### <Sludge Tank>

The sludge tank 700 is a tank for storing the waste liquid SW discharged from the lubricating oil purifier 1. When the waste liquid SW in the sludge tank 700 is 40°C or higher, a cooling device for cooling the waste liquid SW may be installed.

### <Water Supply Line>

As shown in Fig. 3, the water supply line 110 is a water supply unit for supplying the water W (sealing water and replacement water) into the separation chamber SZ (inside the rotating body 3) during the operation of the lubricating oil purifier 1. The water supply line 110 supplies wash water into the separation chamber SZ at the time of maintenance of the lubricating oil purifier 1. The water supply line 110 is provided with a valve (not shown) for adjusting the supply of water into the separation chamber SZ (inside the rotating body 3). Alternatively, the water supply line 110 adjusts the supply of water by controlling a valve SV3 using a control unit 910 and a timer 920 based on a measurement value of any one of the pressure sensor 810, the water detection sensor 820, the ammonia sensor 830, and the leakage detector 840 to be described later.

### <Heavy Liquid Discharge Line>

The heavy liquid discharge line 120 (water drainage unit) is a flow path through which the ammonia water AW (separation water) centrifuged by the lubricating oil purifier 1 is discharged, and is connected to the heavy liquid discharge portion 15 of the lubricating oil purifier 1. The ammonia water AW (heavy liquid) in the lubricating oil purifier 1 overflows from the heavy liquid discharge portion 15, and is discharged to the heavy liquid discharge line 120, stored in the sludge tank 700, and then discarded. The heavy liquid discharge line 120 may be provided with the leakage detector 840.

### <Pressure Sensor>

The pressure sensor 810 is a measurement instrument that measures a pressure of the light liquid to be discharged from the light liquid discharge portion 9 of the lubricating oil purifier 1. The pressure sensor 810 is electrically connected to the control unit 910.

### <Water detection sensor>

The water detection sensor 820 is a measurement instrument that measures an amount of moisture in the light liquid to be discharged from the light liquid discharge portion 9 of the lubricating oil purifier 1. The water detection sensor 820 is electrically connected to the control unit 910. The water detection sensor 820 may be omitted based on a situation of the lubricating oil LO.

### <Ammonia Sensor>

The ammonia sensor 830 is a measurement instrument that measures an ammonia concentration of the ammonia water AW to be discharged from the light liquid discharge portion 9 of the lubricating oil purifier 1. The ammonia sensor 830 is electrically connected to the control unit 910. The ammonia sensor 830 may be omitted based on the situation of the lubricating oil LO.

### <Leakage Detector>

The leakage detector 840 is a measurement instrument that mechanically measures the heavy liquid to be discharged from the heavy liquid discharge portion 15 of the lubricating oil purifier 1. The leakage detector 840 is electrically connected to the control unit 910. The leakage detector 840 may be omitted based on the situation of the lubricating oil LO.

### <Control Device>

The control device 900 shown in Fig. 3 has a function of intermittently or continuously supplying the water W to be supplied to the lubricating oil purifier 1 at a preset timing or at any timing to maintain the specific gravity of the ammonia water AW (heavy liquid) in the separation chamber SZ to a predetermined value or more. The control device 900 includes the control unit 910 and the timer 920. The timer 920, the pressure sensor 810, the water detection sensor 820, the ammonia sensor 830, and the leakage detector 840 are connected to the control unit 910.

### <Purified Lubricating Oil>

The purified lubricating oil is the lubricating oil LO purified by the lubricating oil purifier 1. The purified lubricating oil is stored again in the lubricating oil tank 300 from the lubricating oil purifier 1 via the light liquid discharge line 140, and then supplied to an engine or an accessory (for example, a generator and a boiler) of the ship.

### <<Operations>>

Next, operations of the lubricating oil purification system 100 and the lubricating oil purification method according to the embodiments of the present disclosure will be described with reference to Figs. 1 to 6, as compared with a case in which the lubricating oil LO is separated in a normal state.

For example, as shown in Fig. 1, the lubricating oil LO (stock solution DO) used in the engine 200 is stored in the lubricating oil tank 300, and then introduced into the lubricating oil purifier 1 from the stock solution supply line 130. As shown in Fig. 3, the stock solution DO introduced into the lubricating oil purifier 1 flows upward between the plurality of stacked separation plates 13.

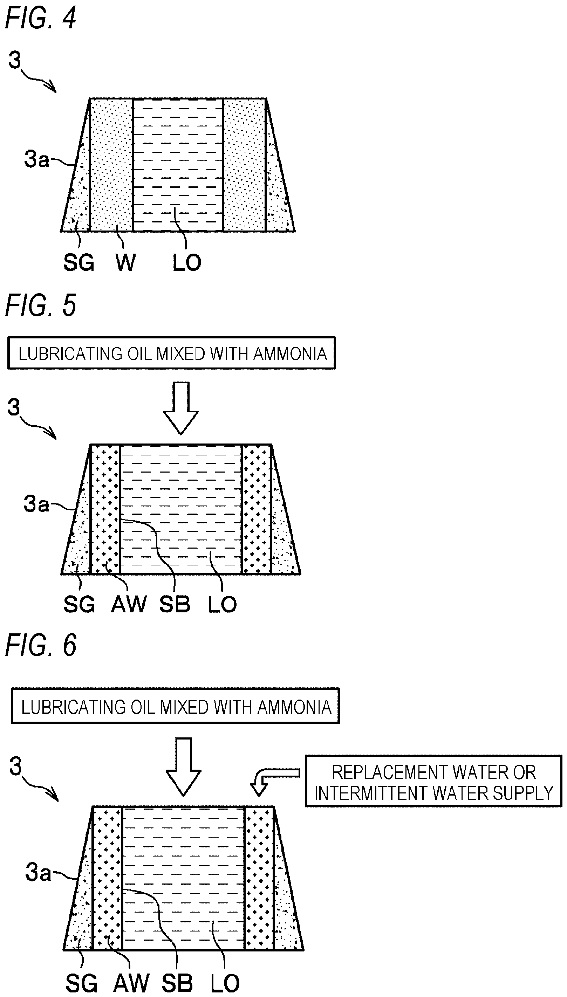

Fig. 4 is a schematic diagram showing a state inside the rotating body 3 when the stock solution DO not containing the ammonia water AW is centrifuged by the lubricating oil purifier 1.

Normally, as shown in Fig. 4, components having a large specific gravity (sludge SG, water W, and the like) move toward an outermost diameter portion in the rotating body 3 and are separated therefrom. A component having a low specific gravity (lubricating oil LO) moves toward the center of the rotating body 3 and is separated therefrom.

Fig. 5 is a schematic diagram showing a state inside the rotating body 3 when the stock solution DO mixed with ammonia is centrifuged by the lubricating oil purifier 1.

In general, when the stock solution DO mixed with the ammonia water AW is supplied into the rotating body 3, as shown in Fig. 5, the stock solution DO is separated into the lubricating oil LO, the ammonia water AW, and the sludge SG.

The specific gravity of the ammonia water AW is smaller than that of the water W not containing ammonia, and as a result, a specific gravity difference between the light liquid (lubricating oil LO) and the heavy liquid (ammonia water AW) becomes small, and thus a separation efficiency between the light liquid (lubricating oil LO) and the heavy liquid (ammonia water AW) may decrease. **In** addition, the separation boundary surface SB between the ammonia water AW and the lubricating oil LO is pushed by the lubricating oil LO and moves outward. Therefore, if the ammonia concentration of the ammonia water AW becomes high (for example, if the ammonia concentration exceeds 6 wt%), the light liquid may leak (light liquid may flow out to the heavy liquid discharge line 120) when three-phase separation is performed (when purifier operation is performed).

In addition, when the concentration of the ammonia water AW is high, the specific gravity difference between the light liquid and the heavy liquid is small, and thus the water W accumulated in the rotating body 3 cannot be located in an ideal position on the separation boundary surface SB.

Fig. 6 is a view showing the lubricating oil purification method according to the embodiment of the present disclosure, and is a schematic diagram showing a state inside the rotating body 3 when the replacement water is introduced into the lubricating oil LO mixed with ammonia and the lubricating oil LO mixed with ammonia is centrifuged by the lubricating oil purifier 1.

In the present embodiment, in a step of centrifuging the stock solution DO mixed with the ammonia water AW (centrifugation step), the specific gravity of the ammonia water AW in the separation chamber SZ can be recovered to the predetermined value or more by supplying water into the separation chamber SZ (water supply step). In this way, the specific gravity of the ammonia water AW can be maintained at a constant value or more by introducing the water W into the separation chamber SZ, and thus stable normal operation can be achieved by minimizing the loss of lubricating oil LO (light liquid flowing out to the heavy liquid discharge portion 15).

The water supply step may be performed intermittently or continuously using the timer 920 and the control device 900 shown in Fig. 3. The water supply step may be performed when the measurement value of at least one of the pressure sensor 810, the water detection sensor 820, the ammonia sensor 830, or the leakage detector 840 reaches a threshold value. In this way, the specific gravity of the ammonia water AW can be maintained at the predetermined value or more (that is, the specific gravity difference between the ammonia water AW and the lubricating oil LO in the separation chamber SZ can be maintained at the predetermined value or more).

In a discharge step, the ammonia water AW and the sludge SG may be discharged using the timer 920 and the control device 900 at regular intervals or when the measurement value of at least one of the pressure sensor 810, the water detection sensor 820, the ammonia sensor 830, or the leakage detector 840 reaches the threshold value. The discharge step and the water supply step are not carried out simultaneously, but only one of them is carried out.

As described above, according to the present embodiment, the stock solution DO mixed with ammonia is separated into the ammonia water AW, the lubricating oil LO, and the sludge SG, and the purified lubricating oil LO can be obtained.

As shown in Fig. 1 or 3, a first embodiment of the present disclosure is, for example, the lubricating oil purification system 100 capable of purifying the stock solution DO mixed with the ammonia water AW into the lubricating oil LO, and includes the engine 200, the lubricating oil purifier 1 configured to separate the stock solution DO containing the lubricating oil LO used in the engine 200 into the light liquid which is at least the purified lubricating oil LO and the heavy liquid containing ammonia, and the water supply unit (water supply line 110) configured to supply the water W into the separation chamber SZ during the operation of the lubricating oil purifier 1.

According to this configuration, the lubricating oil purifier 1 can separate the stock solution DO into the lubricating oil LO, the sludge SG, and the ammonia water AW.

Further, the specific gravity difference between the light liquid (lubricating oil LO) and the heavy liquid (ammonia water AW) in the separation chamber SZ can be set to a size suitable for sedimentation by using the water supply unit (water supply line 110) for supplying the water W into the separation chamber SZ of the lubricating oil purifier 1 during the operation, which provides an operation of enabling stable normal operation.

Further, it is possible to prevent the separation boundary surface SB between the ammonia water AW and the lubricating oil LO in the separation chamber SZ from being formed outside the water intake plate TD, and thus it is possible to stably separate the lubricating oil LO from the stock solution DO containing the ammonia water AW or the like to be discharged to the lubricating oil purifier 1.

The lubricating oil purification system 100 further includes the water drainage unit (heavy liquid discharge line 120) for discharging the heavy liquid to the outside of the separation chamber SZ.

According to this configuration, the lubricating oil purification system 100 includes the heavy liquid discharge line 120, and thus when a predetermined amount or more of heavy liquid is accumulated in the lubricating oil purifier 1, the heavy liquid can be discharged to the outside of the lubricating oil purifier 1 by overflowing.

As shown in Fig. 3, the lubricating oil purification system 100 further includes the pressure sensor 810 that detects the pressure of the light liquid discharged from the light liquid discharge portion 9 of the lubricating oil purifier 1.

According to this configuration, by detecting the pressure of the light liquid discharged from the light liquid discharge portion 9 by the pressure sensor 810, an appropriate amount of water W can be supplied to the lubricating oil purifier 1 according to the pressure of the light liquid in the lubricating oil purifier 1.

As shown in Fig. 3, the lubricating oil purification system 100 further includes the water detection sensor 820 that detects the amount of moisture in the light liquid discharged from the light liquid discharge portion 9 of the lubricating oil purifier 1.

According to this configuration, the water W can be supplied to the lubricating oil purifier 1 according to the amount of moisture in the light liquid discharged from the light liquid discharge portion 9.

As shown in Fig. 3, the lubricating oil purification system 100 further includes the ammonia sensor 830 that detects the ammonia concentration of the light liquid (lubricating oil LO) discharged from the light liquid discharge portion 9 of the lubricating oil purifier 1.

According to this configuration, the water W can be supplied to the lubricating oil purifier 1 according to the ammonia concentration of the ammonia water AW.

As shown in Fig. 3, the lubricating oil purification system 100 further includes the leakage detector 840 that detects leakage of the light liquid from the heavy liquid discharged from the heavy liquid discharge portion 15 of the lubricating oil purifier 1.

According to this configuration, the leakage of the light liquid is detected by the leakage detector 840, and the water is supplied according to a leakage amount of the light liquid, whereby the lubricating oil purifier 1 can be operated in a stable state.

As shown in Fig. 1, the lubricating oil purification system 100 further includes the lubricating oil tank 300 that stores the stock solution DO, a separator inlet line (stock solution supply line 130) for supplying the stock solution DO in the lubricating oil tank 300 to the lubricating oil purifier 1, and a light liquid discharge line 140 for returning the light liquid (lubricating oil LO) flowing out of the lubricating oil purifier 1 to the lubricating oil tank 300. The separator inlet line (stock solution supply line 130) is provided with the lubricating oil supply pump P1 for feeding the stock solution DO stored in the lubricating oil tank 300 to the lubricating oil purifier 1, the heater 400 for heating the lubricating oil LO to be fed to the lubricating oil purifier 1, and the three-way valve 134.

According to this configuration, the viscosity can be decreased by heating the stock solution DO (lubricating oil LO) with the heater 400, and thus the separation efficiency between the solid content and the moisture in the lubricating oil purifier 1 can be enhanced.

The lubricating oil purifier 1 shown in Figs. 1 to 3 is the disk stack centrifuge.

According to this configuration, the lubricating oil purifier 1 is the disk stack centrifuge, and thus although the lubricating oil purifier 1 is small, can exhibit high separation performance and can purify the lubricating oil in a short time.

As shown in Fig. 1 or Fig. 3, the lubricating oil purification method is capable of purifying the stock solution DO mixed with the ammonia water AW into the lubricating oil LO, and includes the centrifugation step of separating the stock solution DO mixed with the ammonia water AW into the lubricating oil LO used in the engine 200 into the light liquid, which is at least the lubricating oil LO purified by the lubricating oil purifier 1, and the heavy liquid containing ammonia, and the water supply step of supplying the water W into the separation chamber SZ during the operation of the lubricating oil purifier 1. The lubricating oil purification method can purify the stock solution DO mixed with the ammonia water AW to perform stable normal operation.

According to the lubricating oil purification method, the stock solution DO mixed with the ammonia water AW is separated into the ammonia water AW, the lubricating oil LO, and the sludge SG. The water is supplied before the specific gravity difference between the light liquid and the heavy liquid becomes small, or when the light liquid flows out to the heavy liquid discharge line 120, and thus the specific gravity of the ammonia water AW in the separation chamber SZ can be adjusted to the predetermined value or more. Accordingly, the specific gravity difference between the light liquid (lubricating oil LO) and the heavy liquid (ammonia water AW) in the separation chamber SZ can be maintained at a size suitable for sedimentation. Furthermore, the separation boundary surface SB between the ammonia water AW and the lubricating oil LO can be brought into a desired position state, and thus it is possible to produce the lubricating oil LO with fewer impurities while preventing the loss of the lubricating oil LO. That is, according to the above lubricating oil purification method, there is a lubricating oil purification system capable of stably purifying the stock solution DO containing the ammonia water AW or the like to the lubricating oil LO.

### [Modifications]

The present disclosure is not limited to the above-described embodiments, various modifications and changes can be made within the scope of the technical idea of the present disclosure, and it goes without saying that the present disclosure also covers the modified and changed invention. The configurations already described are denoted by the same reference numerals, and the description thereof is omitted.

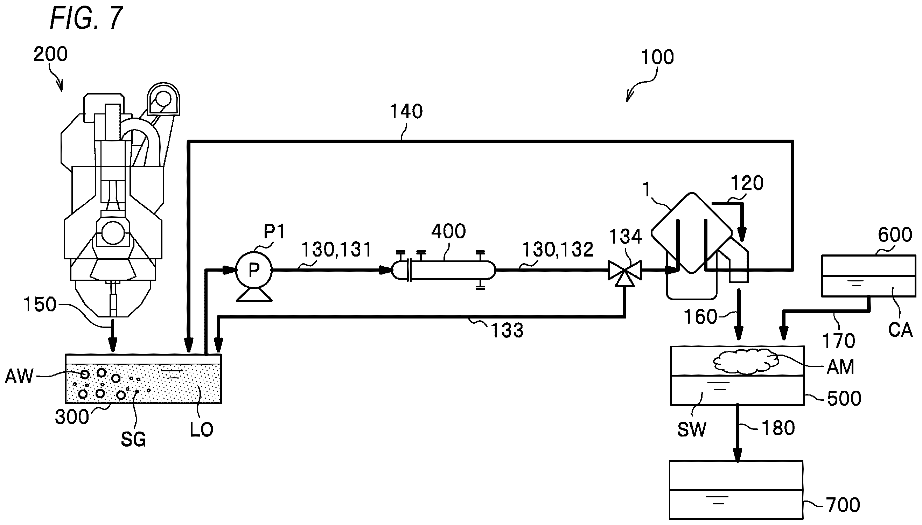

Fig. 7 is a block diagram showing modifications of the lubricating oil purification system and the lubricating oil purification method according to the embodiments of the present disclosure.

As shown in Fig. 7, the lubricating oil purification system 100 may include at least a waste liquid tank 500 that stores the waste liquid SW and a neutralization tank 600 that stores a neutralizing agent CA for neutralizing the waste liquid SW (separation water) stored in the waste liquid tank 500.

According to this configuration, the waste liquid SW can be made harmless by supplying the neutralizing agent CA in the neutralization tank 600 to the waste liquid SW (separation water) in the waste liquid tank 500.

### <Neutralization Tank>

The neutralization tank 600 is a tank for storing the neutralizing agent CA for neutralizing a mixture (hereinafter, referred to as a waste liquid SW) of the sludge SG and the ammonia water AW stored in the waste liquid tank 500. The neutralization tank 600 is provided with a neutralizing agent supply line 170 that supplies the neutralizing agent CA in the neutralization tank 600 to the waste liquid tank 500.

### <Neutralizing Agent>

The neutralizing agent CA is acidic for neutralizing the waste liquid SW in the waste liquid tank 500, and is made of, for example, citric acid. The neutralizing agent CA introduced into the waste liquid SW in the waste liquid tank 500 is a solid or a liquid.

### <Waste Liquid Tank>

The waste liquid tank 500 shown in Fig. 7 is a tank for storing the waste liquid SW containing the sludge SG separated by the lubricating oil purifier 1. The waste liquid tank 500 is disposed downstream of the sludge discharge line 160 that supplies the sludge SG separated by the lubricating oil purifier 1 to the waste liquid tank 500.

The waste liquid SW containing the sludge SG is deposited toward the outermost diameter portion in the rotating body 3 by a centrifugal force of the lubricating oil purifier 1, is discharged from the sludge discharge port 12 to the waste liquid tank 500 via the sludge discharge line 160, and then is stored in the sludge tank 700 via a waste liquid discharge line 180.

In the present embodiment, the ammonia water AW (heavy liquid) separated by the lubricating oil purifier 1 is also stored in the waste liquid tank 500. As shown in Fig. 3, the heavy liquid discharge portion 15, which is a discharge port of the ammonia water AW, is connected to the sludge discharge line 160.

The waste liquid tank 500 may be provided with an air vent member that removes vaporized ammonia or a deodorizing device that eliminates odor of ammonia.

### [Other Modifications]

In the above embodiments, as shown in Fig. 1, the case in which only one lubricating oil purifier 1 is installed has been described, and a plurality of lubricating oil purifiers 1 may be arranged in parallel.

In the above embodiments, the case in which the water supply line 110 (water supply unit) is connected to the liquid inlet pipe 4 has been exemplified, the water supply line 110 (water supply unit) may be connected to the lubricating oil tank 300, or the water supply line 110 (water supply unit) may be connected to the stock solution supply line 130.

In the above embodiments, the case in which the lubricating oil purifier 1 is the three-phase separation type disk stack centrifuge has been exemplified, and a two-phase separation type disk stack centrifuge may be used. In this case, the lubricating oil purifier 1 separates the stock solution DO, which is the lubricating oil LO mixed with the ammonia water AW, into the sludge SG containing the heavy liquid containing the ammonia water AW, and the light liquid, which is the purified lubricating oil LO.

When the two-phase separation type disk stack centrifuge is used as the lubricating oil purifier 1, it is preferred to discharge the waste liquid SW when the measurement value of any one of the pressure sensor 810, the water detection sensor 820, the ammonia sensor 830, and the leakage detector 840 of the lubricating oil purifier 1 reaches the threshold value.

The water detection sensor 820, the ammonia sensor 830, and the leakage detector 840 may be omitted based on the situation of the lubricating oil LO.

## Claims

1. A lubricating oil purification system for purifying a stock solution mixed with ammonia water into lubricating oil, the lubricating oil purification system comprising:
an engine;
a lubricating oil purifier configured to separate a stock solution containing the lubricating oil used in the engine into a light liquid which is at least the purified lubricating oil and a heavy liquid containing ammonia; and
a water supply unit configured to supply water into a separation chamber during operation of the lubricating oil purifier.

2. The lubricating oil purification system according to claim 1, further comprising:
a water drainage unit configured to discharge the heavy liquid to the outside of the separation chamber.

3. The lubricating oil purification system according to claim 1, further comprising:
a pressure sensor configured to detect a pressure of the light liquid discharged from a light liquid discharge portion of the lubricating oil purifier.

4. The lubricating oil purification system according to claim 1, further comprising:
a water detection sensor configured to detect an amount of moisture in the light liquid discharged from the light liquid discharge portion of the lubricating oil purifier.

5. The lubricating oil purification system according to claim 1, further comprising:
an ammonia sensor configured to detect an ammonia concentration of the light liquid discharged from the light liquid discharge portion of the lubricating oil purifier.

6. The lubricating oil purification system according to claim 1, further comprising:
a leakage detector configured to detect leakage of a light liquid from the heavy liquid discharged from a heavy liquid discharge portion of the lubricating oil purifier.

7. The lubricating oil purification system according to claim 1, further comprising:
a lubricating oil tank configured to store the stock solution;
a separator inlet line configured to supply the stock solution in the lubricating oil tank to the lubricating oil purifier; and
a light liquid discharge line configured to return the light liquid flowing out of the lubricating oil purifier to the lubricating oil tank, wherein
the separator inlet line is provided with a lubricating oil supply pump configured to feed the stock solution stored in the lubricating oil tank to the lubricating oil purifier, and a heater configured to heat the lubricating oil to be fed to the lubricating oil purifier.

8. The lubricating oil purification system according to claim 1, wherein
the lubricating oil purifier is a disk stack centrifuge.

9. A lubricating oil purification method for purifying a stock solution mixed with ammonia water into lubricating oil, the lubricating oil purification method comprising:
separating a stock solution containing the lubricating oil used in an engine into a light liquid which is at least the lubricating oil purified by a lubricating oil purifier and a heavy liquid containing ammonia; and
supplying water into a separation chamber during operation of the lubricating oil purifier.
